# EUROPÄISCHE PATENTSCHRIFT

(11) **EP 2 464 762 B1**
(45) Veröffentlichungstag und Bekanntmachung des Hinweises auf die Patenterteilung: **25.04.2018**
(21) Anmeldenummer: 10730185.5
(22) Anmeldetag: 12.07.2010
(51) Int. Cl.: C23C 22/53, C23C 22/83, C23C 22/56, C23C 18/12, C09D 183/08, C09D 5/08, C09D 183/06, C08G 77/26

(54) **WÄSSRIGE SILANSYSTEME FÜR DEN BLANKKORROSIONSSCHUTZ UND KORROSIONSSCHUTZ VON METALLEN**
AQUEOUS SILANE SYSTEMS FOR BARE CORROSION PROTECTION AND CORROSION PROTECTION OF METALS
SYSTÈMES DE SILANE AQUEUX POUR LA PROTECTION CONTRE UNE CORROSION BLANCHE ET LA PROTECTION CONTRE UNE CORROSION DE MÉTAUX

(30) Priorität: 11.08.2009 DE 102009028450; 15.06.2010 DE 102010030111
(43) Veröffentlichungstag der Anmeldung: 20.06.2012
(73) Patentinhaber: Evonik Degussa GmbH, 45128 Essen (DE)
(72) Erfinder: ALBERT, Philipp, 79539 Lörrach (DE); JUST, Eckhard, 79618 Rheinfelden (DE); LAUR, Dirk, 79688 Hausen i.W. (DE); WASSMER, Christian, 79688 Hausen (DE)
(86) Internationale Anmeldenummer: PCT/EP2010/059977
(87) Internationale Veröffentlichungsnummer: WO 2011/018285

(56) Entgegenhaltungen:
- EP-A1- 1 992 718
- EP-A2- 1 101 787
- WO-A1-2004/009714
- WO-A1-2009/030538
- JP-A- 2007 177 314
- US-A1- 2008 081 212

## Beschreibung

Die vorliegende Erfindung betrifft eine neue wässrige, silanbasierte Zusammensetzung sowie deren Herstellung und Verwendung, insbesondere beim Schutz von Metallen vor Korrosion.

Verzinkter Stahl, Aluminium, Stahl und andere Metalle korrodieren an der Atmosphäre. Vor allem verzinkte Stahloberflächen zeigen schon nach wenigen Stunden an der Atmosphäre eine Weißrostbildung. Diese Weißrostbildung ist unerwünscht, da sie sich z. B. sehr nachteilig auf die Lackierung dieser Oberflächen auswirkt. Aus diesem Grund werden verzinkte Oberflächen direkt nach der Verzinkung des Stahls passiviert oder mit Mineralöl behandelt.

Silane werden schon seit vielen Jahren als Haftvermittler/Primer zwischen anorganischen Substraten und organischen Beschichtungen eingesetzt. Der Haftverbund zwischen Metall, Silan und der organischen Beschichtung wird durch viele Parameter beeinflusst. Unter anderem hängt der Haftverbund von der Metalllegierung ab, da die Zusammensetzung der Metalloberfläche die Si-O-Metallbindung bestimmt und die Stabilität der Si-O-Metallbindung von der Metallart abhängt.

Silane sowie Sol-Gel-Systeme werden schon seit vielen Jahren im Korrosionsschutz eingesetzt. Dabei werden Silane nicht nur als Haftvermittler/Primer, sondern auch als Korrosionsschutzbeschichtung/Topcoat verwendet. Silane und wasserbasierte Sol-Gel-Systeme haben den großen Vorteil, dass sie in der Regel umweltfreundlich sind.

In US 6 955 728 wird die Behandlung einer Metalloberfläche mit einer wässrigen Lösung aus einem Acetoxysilan und einem Bis(trialkoxysilylalkyl)amin beschrieben. Dabei wird der Blankkorrosionsschutz von Metallsubstraten sowie der Korrosionsschutz in Kombination mit einer organischen Beschichtung beansprucht.

US 9 931 324 beschreibt die Anwendung von Silansystemen, die aus einem Bis(trialkoxysilylalkyl)amin, einem Bis(trialkyloxysilylalkyl)polysulfan sowie einem organischen Lösungsmittel und Wasser bestehen. Die silanisierte Metalloberfläche wird in einem 2. Schritt mit einer Elektrotauchlackierung beschichtet. Anschließend werden die Proben einem beschleunigten Korrosionstest ausgesetzt und es wird die Unterwanderung am Ritz bestimmt. Die beanspruchten Systeme zeigen dabei eine geringe Unterwanderung am Ritz.

US 2008/081212 offenbart die Behandlung einer Stahloberfläche mit einer Lösung auf der Basis von N-(2-Aminoethyl)-3-aminopropyltrimethoxysilan, wobei das Silan bei 80 °C in Wasser hydrolysiert und kondensiert sowie anschließend dieser Hexafluorozirkonsäure, Aluminiumnitrat und Kupfernitrat zudosiert und der pH auf 3,5 eingestellt wurde.

DE 101 49 148 beansprucht ein Verfahren zur Beschichtung von metallischen Oberflächen, insbesondere Aluminium, Eisen, Kupfer, Magnesium mit einer wässrigen Zusammensetzung. Die wässrige Zusammensetzung enthält neben Wasser, organische Filmbildner, anorganische Partikel, Gleitmittel, ggf. ein organisches Lösungsmittel, ggf. ein Silan bzw. Siloxan, ggf. mindestens einen organischen Korrosionsinhibitor sowie ggf. ein Vernetzungsmittel auf Basis einer basischen Verbindung. Formulierungen auf Basis der beanspruchten Erfindung zeigen im Schwitzwasser-Wechselklima-Test auch nach 10 Zyklen keine Flächenkorrosion.

Gegenstand in DE 10 2004 037 045 ist eine Zusammensetzung, die auf Umsetzung eines Glycidyloxypropylalkoxysilans mit einem wässrigen Kieselsol, einer organischen Säure sowie n-Propylzirkonat, Butyltitanat oder Titanacetylacetonat basiert. Mit einer solchen Zusammensetzung können hydrophobe und oleophobe Beschichtungen auf Metallen und anderen Substraten realisiert werden.

WO 2004/076718 betrifft ein Verfahren zur Beschichtung einer metallischen Oberfläche mit einer wässrigen oder auch organisches Lösungsmittel enthaltenden Zusammensetzung, die weitgehend frei von Cr(VI)-Verbindungen ist. Die Zusammensetzung soll mindestens ein hydrolysierbares Fluor-freies Silan sowie mindestens ein hydrolysierbares Fluor-haltiges Silan enthalten. Die Zusammensetzung soll weiterhin mindestens eine Verbindung in anorganischer Partikelform, ein Gleitmittel, einen organischen Korrosionsinhibitor, ein Korrosionsschutzpigment sowie weitere Komponenten enthalten. Aluminium-Legierungen, die zuerst mit einer Konversionsbeschichtung auf Basis Cer-reicher Seltenerdenverbindungen behandelt wurden, zeigten nach der Behandlung mit der besagten Zusammensetzung Korrosionsbeständigkeiten, die mit einer klassischen Gelbchromatierung vergleichbar waren.

In WO 2004/076717 wird ein Verfahren zur Beschichtung einer metallischen Oberfläche mit einer wässrigen Zusammensetzung zur Behandlung oder zur Vorbehandlung einer weiteren Beschichtung beansprucht. Die wässrige Zusammensetzung enthält mindestens ein hydrolysierbares Silan sowie mindestens ein Metallchelat. Darüber hinaus enthält die Zusammensetzung mindestens einen organischen Filmbildner, anorganische Partikel, ein Gleitmittel, einen organischen Korrosionsinhibitor, ein Korrosionsschutzpigment sowie weitere Komponenten. Mit einer solchen Zusammensetzung können chromfreie Beschichtungen hergestellt werden, die trotz einer Schichtdicke von nur 0,5 bis 2,0 µm hochwertig sein sollen.

US 2008/02135598 beansprucht ein Beschichtungsmaterial, das aus organofunktionellen Silanen, einem organischen Vernetzer, einer metallorganischen Verbindung, einem Hydrolysekatalysator, einem vernetzbaren Präpolymer, anorganischen und organischen Korrosionsinhibitoren sowie weiteren Komponenten besteht. Das Beschichtungssystem wird in einer Schichtdicke von 3 bis 15 µm angewandt und kann 24 h bei Raumtemperatur oder 1 h zwischen 60 und 120 °C gehärtet werden. Das Beschichtungssystem zeigt auch nach 500 h im Salzsprühtest auf der Aluminiumlegierung AA2024 keine Unterwanderung am Ritz. Jedoch ist anzumerken, dass die besagten Beschichtungssysteme unmittelbar nach der Herstellung auf der Metalloberfläche appliziert werden müssen.

WO 2009/055020 betrifft eine Beschichtung, die sich durch geringe Reibung, hohe Abrasionsresistenz und eine gute Korrosionsresistenz auszeichnet. Das System besteht aus 2-Komponenten. Komponente 1 besteht aus einem organofunktionellen Alkoxysilan, einem Hydrolysekatalysator, z. B. Titan- oder Zirkonalkoholat, einem Adhäsionspromotor sowie einem Verlaufsmittel. Die zweite Komponente besteht aus einem Gleitmittel.

JP 2005290534 beansprucht Korrosionsschutzschichten auf Aluminium-Zinkbeschichtetem Stahl. Die Zusammensetzung besteht aus Vanadium(IV)-Verbindungen, Phosphorsäure bzw. Phosphate, wasserlöslichen bzw. dispergierbaren Harzen, Methacrylsäure sowie weiteren Komponenten. Die Harze werden aus epoxyfunktionellen und aminofunktionellen Silanen hergestellt.

JP 1996232618 offenbart eine Formulierung zur Beschichtung von verzinkten Stahloberflächen. Die Beschichtung setzt sich zusammen aus einer Polymeremulsion, einem organofunktionellen Silan sowie mindestens einem Metallion aus der Gruppe Al, Mg, Ca, Zn, Ni, Co, Fe, Zr, Ti, W und Mn. Die Formulierung ist nicht lagerstabil und bildet einen geschlossenen Film auf der Oberfläche, der gegen Weißrost schützen soll.

WO 2004/009714 beansprucht eine Zusammensetzung, die als Primer oder als Blankkorrosionsschutz auf Metallsubstraten aufgebracht werden kann. Die Zusammensetzung besteht aus einem wasserlöslichen organofunktionellen Silan sowie einem auslaugbaren Inhibitor. Als Inhibitor werden Chromat(VI)- und Cer(III)-lonen angeführt.

Aus DE 197 45 801 ist ein Verfahren zum Beschichten von Metallen zu entnehmen. Als Metallsubstrate werden Stahl, verzinnter Stahl, verzinkter Stahl oder Aluminium genannt. Aus einer Lösung oder einer Dispersion werden 2- bis 4-wertige Metall- und/oder Phosphationen in Anwesenheit eines organischen Filmbildners auf die Metalloberfläche aufgebracht. Dabei kann die Zusammensetzung auch ein Glycidyloxypropyltrimethoxysilan, ein Tetraethoxysilan oder Aminopropyltriethoxysilan als Additiv enthalten. Die Formulierungen, die ein Silan als Additiv enthalten, zeigen besonders geringe Unterwanderungen am Ritz.

JP 63186777 beansprucht eine Zusammensetzung, die als antikorrosiver Primer auf Metalloberflächen eingesetzt werden kann. Die Formulierung setzt sich zusammen aus einem wasserlöslichen - dispergierbaren anorganischen/organischen Reaktionsprodukt, einem wasserlöslichen - dispergierbaren organischen Harz, einem Trialkoxysilan sowie Cr(VI) und Cr(III)-Salze bzw. Verbindungen. Die Zusammensetzung muss nach dem Mischen appliziert werden.

US 4 450 255 beansprucht eine wässrige Zusammensetzung zur Beschichtung von Metallsubstraten gegen Korrosion. Die Formulierung enthält kolloidales Aluminiumoxid, - in situ aus Alkoxyaluminium -, Alkyltrimethoxysilan, Essigsäure, Isopropanol, Wasser und kolloidales Siliziumdioxid. Aluminium wurde beschichtet und das Sol-Gel-System 6 h bei 120 °C gehärtet. Im mit Kupfer beschleunigten Korrosionstest wurde nach 72 h Korrosion beobachtet.

EP 2 009 073 lehrt eine alkoholische, chromfreie Lösung, die aus einem Alkoxysilanoligomer besteht. Die Siliziumatome im Oligomer sind teilweise durch Titanatome ersetzt. Die Lösung wird durch Tauchen und Spinncoating auf die verzinkte Oberfläche aufgebracht. Die Schichtdicke beträgt 0,5 bis 3,0 mm und wird bei 120 °C gehärtet.

In JP 2007177314 wird eine Zusammensetzung zur Behandlung von Metalloberflächen, insbesondere Stahl und verzinkter Stahl, gegen Korrosion beansprucht. Die Zusammensetzung besteht aus einem Kieselsol, einem Epoxysilan, und/oder einem Aminosilan, einem oligomeren Alkoxysilan (Tetraalkoxysilan), Phosphationen, Fluoridionen, sowie Metallionen aus der Reihe V, Ti, Zr, Zn, Mn, Mg, Al, Co, Ni, Mo, W, und Ce. Die Formulierung soll eine gute Lagerstabilität, sowie einen guten Korrosionsschutz bieten. Darüber hinaus soll die Beschichtung säure-, basen-, und abrasionsbeständig sein.

WO 2008/003273 beansprucht eine korrosionsbeständige Beschichtung, die aus 3 Schichten besteht, die jeweils Cr(VI) frei sind. Das Grundmaterial besteht im Wesentlichen aus einem phosphatierten Stahl oder aus einer phosphatierbaren Febasierten Legierung. Auf die Phosphatierungsschicht wird nasschemisch eine Silanschicht und auf die Silanschicht eine modifizierte Polysiloxanschicht aufgebracht. Zinkphosphatierte Stahlsubstrate wurden beschichtet und die Korrosionsbeständigkeit wurde mittels Kondenswasser-Wechselklima-Tests (DIN ISO 3231) in einer Schwefeldioxidatmosphäre untersucht. Es konnte eine bessere Beständigkeit im Vergleich zu einlagigen Beschichtungen gefunden werden.

In JP 1996206042 wird eine wässrige Formulierung beansprucht, die aus wasserlöslichen Metallsalzen und Additiven besteht. Die Acetate enthalten Metallionen aus den Gruppen der Perioden 4 und 5 der Nebengruppe IIB, der Perioden 4 und 6 aus der Nebengruppe IB, der Perioden 4 bis 6 der Hauptgruppen IVA, VA, VIA des Periodensystems der Elemente (PSE) sowie weitere Metallionen. Weiterhin ist ein wasserlösliches Harz sowie gamma-Glycidyloxypropyltrimethoxysilan in der Formulierung enthalten. Die Beschichtung soll speziell die Kantenunterwanderung verhindern und gegen Korrosion schützen.

WO 2005/078026 offenbart eine Formulierung zur Antikorrosions-Beschichtung von metallischen Teilen. Die Formulierung enthält organische Titanate und oder Zirkonate, Metallpulver oder eine Mischung aus Metallpulvern sowie ein silanbasierendes Bindemittel und Wasser. Die beschichteten Metallteile wurden in einem Standardsalzsprühtest geprüft (ISO 9227). Im Vergleich zu herkömmlichen Systemen soll die erfindungsgemäße Beschichtung eine 2- bis 3-mal höhere Beständigkeit im Salsprühnebel aufweisen.

WO 2007/119023 beansprucht eine Formulierung mit Nanopartikeln, die als Schutzschicht für Metalloberflächen eingesetzt werden kann. Das Bindemittel besteht z. B. aus einem Copolymerisat, das gamma-Glycidyloxypropyltrimethoxysilan und Tetramethoxysilan enthält. Die Nanopartikel sollen eine Größe von 2 bis 100 nm aufweisen und können aus Al-, Ce-, Si-, Zr-, Sn-Alkoxiden gebildet werden. Die Beschichtung soll eine gute Kratzbeständigkeit sowie einen guten Korrosionsschutz aufweisen.

In Electrochimica Acta (2009), 54 (9), 2655-2662 wurde der Einfluss von Cer(IV)-Ionen auf die Polymerisation bzw. Polykondensation von 1,2-Bis(triethoxysilyl)ethan untersucht. Dazu wurden verschiedene Methoden wie Impedanzspektroskopie, Kraftmikroskopie, IR-Spektroskopie, Kernresonanzspektroskopie und Thermogravimetrie eingesetzt. Es wurde festgestellt, dass sich durch die Cer(IV)-lonen ein gleichmäßigerer Silanfilm ausbildet.

In Surface and Coatings Technology (2004), 187 (2-3), 216-224 wurde die Aluminiumlegierung 2024-T3 nach einer Zinkphosphatierung mit einer Cr(VI)-Lösung oder alternativ mit einer 4 %igen 1,2-Bis(triethoxysilyl)ethan-Lösung gespült. Es konnte gezeigt werden, dass die Behandlung mit der 4 %igen 1,2-Bis(triethoxy-silyl)ethan-Lösung im Korrosionstest vergleichbare Ergebnisse zur Cr(VI)-Lösung ergibt. Die 1,2-Bis(triethoxysilyl)ethan-Lösung basiert auf organischen Lösungsmitteln.

Der vorliegenden Erfindung lag die Aufgabe zugrunde, ein weiteres, umweltfreundliches, wasserbasiertes und lagerstabiles System bereitzustellen, das einen guten Blankkorrosionsschutz auf Metallen bietet. Darüber hinaus sollte der Blankkorrosionsschutz mit gängigen Beschichtungssystemen einen dauerhaften Korrosionsschutz bieten. Ein besonderes Anliegen war, verzinkte Stahloberflächen alternativ zu behandeln, da diese oft mittels Cr(VI)-Lösungen behandelt werden und der Einsatz von Cr(VI)-Verbindungen vermieden werden soll. Ferner können bekannte Korrosionsschutzsysteme gegebenenfalls Cr(III)-lonen in Kombination mit toxische Schwermetallionen, wie zum Beispiel Co (II)-lonen, enthalten. Es war deshalb auch ein Ziel, nach Möglichkeit besonders toxische Schwermetallionen in Korrosionsschutzsysteme zu ersetzen bzw. zu vermeiden. Insbesondere sollten die toxischen Co-lonen in Cr(III)-Beschichtungen substituiert werden, ohne dabei Nachteile beim Korrosionsschutz zu erhalten.

Die Aufgabe wird erfindungsgemäß entsprechend den Merkmalen in den Patentansprüchen gelöst.

So wurde in überraschender Weise gefunden, dass Metallsalze, die lagerstabilen, wässrigen und nahezu VOC-freien Silansystemen zugesetzt werden, den Blankkorrosionsschutz auf Metallsubstraten stark erhöhen. Das gilt nicht nur für unbehandelte, sondern auch für z. B. phosphatierte oder chromitierte Metalloberflächen. Man setzt dabei als Metallsalz ein Cr³⁺-Salz oder ein Gemisch aus mindestens zwei Metallsalzen ein, vorzugsweise ein Gemisch aus Cr³⁺- und Al³⁺-Salzen, ein Gemisch aus Cr³⁺- und Ce³⁺-Salzen, ein Gemisch aus Cr³⁺- und Ce⁴⁺-Salzen, ein Gemisch aus Cr³⁺-, Ce³⁺- und Ce⁴⁺-Salzen, ein Gemisch aus Cr³⁺-, Al³⁺- und Ce³⁺-Salzen oder ein Gemisch aus Cr³⁺-, Al³⁺-, Ce⁴⁺- und Ce³⁺-Salzen, wobei man mindestens ein Metallsalz aus der Reihe der Nitrate und der Acetate verwendet. Die besagten Salze bzw. Metallsalze oder ihre wässrige Lösung können der wässrigen Silanformulierung in der entsprechenden Konzentration zugegeben und nach gutem Durchmischen der Lösung vorteilhaft eingesetzt werden. Auch ist es vorteilhaft, eine solche Lösung vor ihrer Applikation einen Tag bei 20 °C reifen zu lassen. Die zu behandelnden Substrate werden in der Regel zuerst gereinigt. Die Reinigung der Metalloberfläche richtet sich nach dem Metallsubstrat und dem Grad der Verschmutzung. Zinkoberflächen können z. B. in einem alkalischen Tensidbad gereinigt und anschließend mit deionisiertem Wasser gespült werden.

Erfindungsgemäß zu behandelnde Substrate bzw. Substratoberflächen, insbesondere Metallsubstrate, können bei Raumtemperatur oder auch bei höherer Temperatur in die Lösung getaucht werden. Es ist aber auch möglich, die Substrate durch Sprühen zu behandeln. Der dabei entstehende "Overspray" kann gesammelt und wieder eingesetzt werden. Nach der Applikation einer erfindungsgemäßen Zusammensetzung kann das behandelte Substrat bei Umgebungstemperatur, vorzugsweise oberhalb 20 °C, besonders bevorzugt bei einer Temperatur von 40 °C bis 120 °C oder auch bei einer höheren Temperatur oberhalb 120° C getrocknet bzw. die erfindungsgemäße Formulierung gehärtet werden. Die Trocknung bzw. Härtung/Vernetzung kann in einem Ofen, mit einem Gebläse, mit einem Heißluftgebläse oder auch mit einem IR-Strahler durchgeführt werden. Die Trocknungs- und Härtungszeit hängt in der Regel von der Art des Substrats, der Größe, Geometrie der Metallteile sowie der Trocknungs- und Härtungstemperatur ab und kann von mehreren Sekunden bis zu mehreren Minuten oder auch Tagen dauern.

Erfindungsgemäße wässrige Zusammensetzungen zeichnen sich trotz Zusatz von Metallionen zu einem Silansystem durch eine ausgezeichnete Lagerstabilität bei Raumtemperatur von mehr als drei Monaten und hervorragende Eigenschaften damit behandelter Metalloberflächen bzw. Blankmetalloberflächen aus. So können insbesondere Metalloberflächen von Eisen bzw. Eisenlegierungen, Stahl, verzinktem Stahl, phosphatiertem Stahl, chromatiertem bzw. chromitiertem Stahl, Aluminium, Aluminiumlegierungen, Titan, Titanlegierungen, Magnesium, Magnesiumlegierungen, Kupfer, Zink sowie Legierungen die ein mehrere der zuvor genannten Metalle enthalten, wie Magnesiumlegierungen oder Aluminiumlegierungen, um nur einige Beispiele zu nennen, vorteilhaft mit einer erfindungsgemäßen Zusammensetzung in einfacher und wirtschaftlicher Weise behandelt werden. So behandelte Metalloberfläche zeichnen sich durch exzellente und dauerhafte Korrosionsbeständigkeit aus. Auch lassen sich so beschichtete Metalloberflächen ausgezeichnet mit weiteren Beschichtungssystemen, wie Flüssiglacken oder Pulverlacken, insbesondere wasserbasierten oder lösungsmittelbasierten Flüssiglacken, beschichten, wobei eine sehr gute Haftung der zusätzlichen Beschichtungen erzielt werden kann. Darüber hinaus sind erfindungsgemäße Zusammensetzungen frei von toxischem Kobalt und Chrom(VI). Auch sind erfindungsgemäße wässrige Zusammensetzungen arm an bzw. im Wesentlichen frei von flüchtigen organischen Verbindungen (VOC) und damit umweit- bzw. klimafreundlich.

Gegenstand der vorliegenden Erfindung ist daher ein Verfahren zur Herstellung einer wässrigen Zusammensetzung,
durch
(i) gezielte Hydrolyse und Kondensation bzw. Cokondensation (- der Begriff Kondensation bzw. Cokondensation schließt hier und nachfolgend eine Blockkondensation bzw. Blockcokondensation ein -) mindestens eines Aminoalkylalkoxysilans aus der Reihe der Monoaminoalkylalkoxysilane, Bisaminoalkylalkoxysilane sowie Trisaminoalkylalkoxysilane und optional mindestens eines Alkoxysilans aus der Reihe der Fluoralkylalkoxysilane, Alkylalkoxysilane sowie Tetraalkoxysilane,
(ii) in Gegenwart mindestens eines Hydrolyse- bzw. Kondensationskatalysators und Wasser, wobei man vorzugsweise pro Mol eines eingesetzten Silans gemäß (i) 0,5 bis 100 Mole Wasser, besonders bevorzugt 1,5 bis 50 Mole, ganz besonders 2 bis 30 Mole Wasser einsetzt, sowie optional unter Zusatz mindestens eines Löse- bzw. Verdünnungsmittels,
(iii) anschließend entfernen mindestens eines Anteils des Löse- bzw. Verdünnungsmittels sowie des bei der Hydrolyse und Kondensation bzw. Cokondensation entstandenen Hydrolysealkohols aus dem Reaktionsgemisch (nachfolgend auch kurz Stammlösung bzw. Stammlösung gemäß A oder Stammlösung A genannt),
(iv) der Zugabe von Wasser und/oder einer wässrigen Säure zu dem Reaktionsgemisch gemäß (iii), wobei man den pH im Reaktionsgemisch auf einen Wert von 2 bis < 7 einstellt, und
(v) nachfolgend der Zusatz mindestens eines Metallsalzes aus der Reihe des Chroms mit der Oxidationsstufe 3+und/oder der Zusatz einer wässrigen Lösung mindestens eines der zuvor genannten Metallsalze, wobei man Metallsalz in einer Konzentration von 0,01 bis 6 Gew.-%, bezogen auf die fertige Zusammensetzung, einsetzt und als Metallsalz mindestens eines aus der Reihe der Nitrate oder Acetate auswählt.
Man setzt beim erfindungsgemäßen Verfahren als Metallsalz eines aus der Reihe der Nitrate oder Acetate ein. Als erfindungsgemäß zu verwendende Metallsalze eignen sich besonders vorteilhaft - aber nicht ausschließlich - Chrom(III)nitrat, Chrom(III)acetat, oder Gemische aus mindestens zwei der zuvor genannten Salze.

Man kann aber auch andere wasserlösliche Metallsalze der zuvor genannten ausgewählten Metalle einsetzen.

Bevorzugt setzt man beim erfindungsgemäßen Verfahren als Aminoalkylalkoxysilan Monoaminoalkylalkoxysilane, wie Aminopropyltrimethoxysilan, Aminopropyltriethoxysilan, Aminoethyltrimethoxysilan, Aminoethyltriethoxysilan, Aminomethyltrimethoxysilan, Aminomethyltriethoxysilan, Aminopropylmethyldimethoxysilan, Aminopropylmethyldiethoxysilan, N-n-Butylaminopropyltrimethoxysilan, N-n-Butylaminopropyltriethoxysilan, Aminoethylaminopropyltrimethoxysilan, Aminoethylaminopropyltriethoxysilan,
so genannte Triaminoalkylalkoxysilane, wie Aminoethylaminoethylaminopropyltrimethoxysilan oder Aminoethylaminoethylaminopropyltriethoxysilan, Bisaminoalkylalkoxysilane bzw. Bis(trimethoxysilylmethyl)amine, wie Bis(triethoxy-silylmethyl)amin, Bis(trimethoxysilylethyl)amin, Bis(triethoxysilylethyl)amin, Bis(trimethoxysilylpropyl)amin, Bis(triethoxysilylpropyl)amin, Bis(trimethoxysilylisopropyl)-amin, Bis(triethoxysilylisopropyl)amin,
sowie Trisaminoalkylalkoxysilane bzw. Tris(trimethoxysilylmethyl)amine, wie Tris-(triethoxysilylmethyl)amin, Tris(trimethoxysilylethyl)amin, Tris(triethoxysilylethyl)amin, Tris(trimethoxysilylpropyl)amin, Tris(triethoxysilylpropyl)amin, Tris(trimethoxysilyl-isopropyl)amin, Tris(triethoxysilylisopropyl)amin,
oder Gemische aus mindestens zwei der zuvor genannten Aminoalkylalkoxysilane ein.

Ferner kann man dabei zusätzlich mindestens ein Alkoxysilan aus der Reihe der Fluoralkylalkoxysilane, Alkylalkoxysilane sowie Tetraalkoxysilane einsetzen, beispielsweise, Tridecafluor-1,1,2,2-tetrahydrooctyltrimethoxysilan, Tridecafluor-1,1,2,2-tetrahydrooctyltriethoxysilan, Methyltrimethoxysilan, Methyltriethoxysilan, Ethyltrimethoxysilan, Ethyltriethoxysilan, n-Propyltrimethoxysilan, n-Propyltriethoxysilan, Isobutyltrimethoxysilan, Isobutyltriethoxysilan, Octyltrimethoxysilan, Octyltriethoxysilan, Tetramethoxysilan, Tetraethoxysilan oder Gemische aus mindestens zwei der zuvor genannten Silane einsetzen.

Darüber hinaus kann man aber auch entsprechende partiell hydrolysierte bzw. vorkondensierte Silane bzw. Silangemische einsetzen.

Geeignete Löse- bzw. Verdünnungsmittel sind beispielsweise Alkohole, wie Methanol, Ethanol oder Isopropanol - um nur einige Beispiele zu nennen.

Als Hydrolyse- bzw. Kondensationskatalysators kann man zum Beispiel - aber nicht ausschließlich - organische oder anorganische Säuren, wie Ameisensäure, Essigsäure, wässrige Salpetersäure, Phosphorsäure oder auch Phosphonsäuren, verwenden.

Zur Herstellung einer erfindungsgemäßen Zusammensetzung setzt man bevorzugt 0,5 bis 50 Gewichtsteile, vorzugsweise 1 bis 30 Gewichtsteile, besonders bevorzugt 2 bis 20 Gewichtsteile, ganz besonders bevorzugt 5 bis 15 Gewichtsteile, insbesondere 7 bis 12 Gewichtsteile einer Stammlösung A, 1 bis 100 Gewichtsteile, vorzugsweise 10 bis 90 Gewichtsteile VE-Wasser, 0 bis 100 Gewichtsteile wässrige Säure und 0,01 bis 5 Gewichtsteile, vorzugsweise 0,1 bis 3 Gewichtsteile, besonders bevorzugt 0,2 bis 2 Gewichtsteile, ganz besonders bevorzugt 0,3 bis 1,5 Gewichtsteile, insbesondere 0,5 bis 1 Gewichtsteile Metallsalz.

Dabei beträgt der Gehalt an angesetztem Metallsalz, bezogen auf die fertige Zusammensetzung, 0,01 bis 6 Gew.-%, besonders bevorzugt 0,05 bis 3 Gew.-%, ganz besonders bevorzugt 0,1 bis 2 Gew.-%, insbesondere 0,2 bis 1,0 Gew.-%, wobei auch die Werte 0,3, 0,4, 0,5, 0,6, 0,7, 0,8 und 0,9 Gew.-% zu erwähnen sind.

Darüber hinaus weist eine erfindungsgemäße Zusammensetzung vorteilhaft nur einen Gehalt an flüchtigen organischen Verbindungen (VOC), beispielsweise Alkohol, wie Methanol oder Ethanol, von weniger als 10 Gew.-%, vorzugsweise weniger als 5 Gew.-%, besonders bevorzugt weniger als 3 Gew.-%, ganz besonders bevorzugt weniger als 2 Gew.-%, insbesondere von 0,001 bis 1 Gew.-%, bezogen auf die fertige Zusammensetzung, auf. Der Gehalt an VOC kann beispielsweise mittels GC bzw. GC/MS bestimmt werden; dabei kann man einen inneren Standard einsetzen.

Die erfindungsgemäßen Zusammensetzungen können mit weiteren Additiven versehen werden. Dazu können anorganische Verbindungen in Partikelform, Gleitmittel, Korrosionsinhibitoren, Benetzungshilfsmittel, Mittel zur Neutralisation bzw. zur Veränderung des pH-Wertes und zur Stabilisierung des wässrigen Silansystems sowie Komplexbildner, wie Oxalate, eingesetzt werden. Weiterhin können organische Filmbildner auf Basis von Acrylsäureestern, Acryl-Polyester-Polyurethan-Copolymerisaten, Ethylen-Acryl-Copolymersisaten, Polyesterharze mit freien Carboxylgruppen sowie weitere Polymere bzw. Polymerdispersionen eingesetzt werden. So kann einer erfindungsgemäßen Zusammensetzung vorteilhaft eine wässrige Dispersion zugesetzt sein, beispielsweise eine SiO₂-Dispersion, eine Al₂O₃-Dispersion oder eine TiO₂-Dispersion. Die Partikelgröße kann dabei z. B. von 1 nm bis in den µm-Bereich reichen.

Gegenstand der vorliegenden Erfindung ist ferner eine wässrige Zusammensetzung, die nach dem erfindungsgemäßen Verfahren erhältlich ist.

Im Allgemeinen kann man zur Herstellung einer erfindungsgemäßen Zusammensetzung zunächst so verfahren, dass man ein Aminoalkylalkoxysilan sowie gegebenenfalls weitere unter (i) genannten Alkoxysilane oder entsprechende Vorkondensate sowie gegebenenfalls unter Zusatz eines Löse- bzw. Verdünnungsmittels unter Zugabe definierter Mengen VE-Wasser bei in der Regel guter Durchmischung hydrolysiert und kondensiert/blockkondensiert bzw. cokondensiert/blockcokondensiert. Dabei kann die Dosierung des Wassers in einer oder mehreren Portionen erfolgen. In der Regel führt man eine praktisch vollständige Hydrolyse der eingesetzten Alkoxysilane und der dafür notwendigen Menge an Wasser durch. Die Umsetzung kann üblicherweise bei Raumtemperatur bis hin zu einer Temperatur für Rückflussbedingungen durchgeführt werden. Auch kann die Umsetzung in Gegenwart eines Hydrolyse- bzw. Kondensationskatalysators durchgeführt werden. Geeigneterweise entfernt man überschüssige flüchte organische Verbindungen aus dem so erhaltenen Reaktions- bzw. Produktgemisch, insbesondere den entstandenen Hydrolysealkohol sowie eingesetztes Löse- bzw. Verdünnungsmittel, beispielsweise durch eine Destillation unter vermindertem Druck. Darüber hinaus kann das Reaktions- bzw. Produktgemisch unter Zusatz von VE-Wasser verdünnt werden und eine gewünschte Konzentration eingestellt werden. Geeigneterweise prüft man ferner den pH-Wert der vorliegenden Stammlösung. Dieser kann, sofern erforderlich, durch Zusatz einer organischen oder anorganischen wässrigen Säure auf einen pH-Wert < 7 eingestellt werden. Anschließend kann man erfindungsgemäß eine definierte Menge des Metallsalzes - als solches oder als wässrige Lösung- unter guter Durchmischung der Stammlösung zusetzen. So kann man vorteilhaft eine in der Regel anwendungsfertige erfindungsgemäße Zusammensetzung erhalten. In manchen Fällen ist es vorteilhaft, die Lösung einen Tag bei 20 °C "reifen" zu lassen. Die Lösung kann beispielsweise auch für 10 Minuten auf 60 °C erwärmt werden.

Zur Herstellung einer erfindungsgemäßen Zusammensetzung kann man aber auch eine Stammlösung A eines Silansystems, wie es insbesondere aus EP 0 716 127, EP 0 846 716, EP 1 101 787, WO 06/010666 sowie WO 2009/030538 zu entnehmen ist (der Inhalt der zuvor genannten Schutzrechte ist gleichzeitig der Offenbarung der vorliegenden Anmeldung zuzurechnen), herstellen, diese, sofern erforderlich, mit Wasser auf eine gewünschte Konzentration verdünnen und/oder durch Zugabe einer wässrigen, organischen oder anorganischen Säure, insbesondere Essigsäure oder Salpetersäure, auf einen pH-Wert < 7 einstellen, vorzugsweise < 6, besonders bevorzugt < 5, insbesondere von 2 bis 4, dabei ist freilich auch der pH-Wert 3 zu erwähnen, und anschließend unter guter Durchmischung eine definierte Menge mindestens eines erfindungsgemäß ausgewählten Metallsalzes oder einer entsprechenden wässrigen Lösung des Metallsalzes zusetzen. Ausgehend von einer der besagten Stammlösungen ist das Verfahren überraschend einfach und unproblematisch. Dabei kann die Bestimmung des pH-Werts beispielsweise mittels pH-Papier der Fa. Merck erfolgen.

Die erfindungsgemäßen Zusammensetzungen und/oder Mischungen können zur Hydrophobierung von Substraten bzw. Substratoberflächen, insbesondere von Metallen bzw. Metalllegierungen, beispielsweise mit freien Hydroxyfunktionen vorteilhaft verwendet werden. Durch die Vernetzung mit den Hydroxyfunktionen und/oder über eine mögliche Komplexbildung und/oder Reaktion der Aminofunktionen wird eine hohe Festigkeit der aufgebrachten Schicht auf den Substratoberflächen erzielt. Allgemein können die Zusammensetzungen und/oder Mischungen zur Behandlung oder Modifizierung von Substratoberflächen, insbesondere zum Aufbau von Barriereschichten auf Substratoberflächen genutzt werden. Bevorzugt werden die Zusammensetzung bzw. Mischungen zur Hydrophobierung von Substrat- bzw. Metalloberflächen, wie beispielsweise Edelstahl, Aluminium, Aluminiumlegierungen, Stahl, d. h. Eisenlegierungen bzw. Stahllegierungen, Titan, Magnesium, Magnesiumlegierungen, Kupfer, Kupferlegierungen, Zink, verzinktem Stahl, insbesondere feuerverzinkter Stahl bzw. Eisen sowie galvanischer verzinkter Stahl bzw. Eisen, oder auch von Glasoberflächen, organischen Materialien, insbesondere Kunststoffoberflächen, wie Polycarbonat, PMMA, PA, Compositen aus Epoxidharz oder UP-Harz, oder insbesondere von Naturfasern, wie beispielsweise Papier, Baumwolle oder Holz, von mineralischen Oberflächen, wie Beton, Ziegelsteinen, Sandstein, Gips sowie andere anorganische Oberflächen, eingesetzt. Basieren die Zusammensetzungen auf Siliciumverbindungen enthaltend Fluorsilane, in Form von Co-Kondensaten oder in der Mischung, dann können vorteilhaft auch oleophobe und Anti-Graffiti-Eigenschaften erzielt werden. Weitere vorteilhafte Anwendungsgebiete erschließen sich, bei der Primerung von Oberflächen, aus Glas, Metall, mineralischen Oberflächen, wie Beton, Mörtel, Estrich, Gipsplatten oder Sandstein oder organischen Materialen, insbesondere von Naturfasern, wie beispielsweise Papier, Baumwolle oder Holz. Beispielsweise durch die Primerung von Metalloberflächen kann eine verbesserte Haftung und damit unter anderem eine besserer Korrosionsschutz erreicht werden. Als Beschichtung können dabei Flüssiglacke, insbesondere Lösungsmittel- bzw. wasserbasierte Lacke, wie z. B. Epoxylacke, 2 K-PU-Lacke oder andere Flüssiglacke, eingesetzt werden. Darüber hinaus kann die erfindungsgemäße Zusammensetzung auch mit Pulverlacken wie z. B. Polyesterpulverlacken, Epoxypulverlacken oder auch PVDF-Pulverlacken beschichtet werden.

Ebenfalls kann man eine erfindungsgemäße Zusammensetzung oder eine Mischung, die auf einer solchen Zusammensetzung basiert, vorteilhaft zum Korrosionsschutz von bereits oben genannten Metallen sowie Legierungen, wie Eisen, Stahl, Edelstahl, Aluminium, Aluminiumlegierungen, Silber, Kupfer - um nur einige Beispiele zu nennen -, verwenden. Dabei können die vor Korrosion zu schützenden Metalle bzw. Metalloberflächen unbehandelt oder vorbehandelt sein, insbesondere sind als Beispiele für behandelte Metalloberflächen phosphatierte, chromatierte, chromitierte, verzinkte Metalloberflächen oder verzinkte Metalloberflächen, die zusätzlich chromatiert, chromitiert oder phosphatiert sind, zu nennen. Unter chromatierten Metalloberflächen versteht man im Allgemeinen solche, die mit einem Chrom(VI)-haltigen Mittel behandelt bzw. passiviert sind. Analog dazu versteht man hier unter einer chromitierten Metalloberfläche solche, die mit einem Chrom(III)-haltigen Mittel behandelt bzw. passiviert sind. Zudem können die wässrigen Zusammensetzungen zur Gesteinsverfestigung bei der Erdölförderung, beispielsweise bei der Herstellung von Beton- und/oder Mörtelfertigbauteilen, wie Rohren etc., oder in wässrigen Lack- oder Harz-Formulierungen eingesetzt werden. Gemäß einer weiteren Anwendungsmöglichkeit können die erfindungsgemäßen Zusammensetzungen, insbesondere durch Zugabe von Additiven und/oder Füllstoffen in ihren Produkteigenschaften weiter modifiziert werden. So kann beispielsweise durch Zugabe eines Fließhilfsmittels eine verbesserte Verteilung auf einer Oberfläche erzielt werden. Durch Zugabe von Katalysatoren, beispielsweise Zirkon-n-propylat, oder eine Modifizierung des pH-Wertes kann die Aushärtung der fertigen Zusammensetzung beschleunigt werden.

Gegenstand der Erfindung sind auch beschichtete oder verfestigte Produkte, die durch Verwendung der erfindungsgemäßen Zusammensetzung und/oder Mischungen erhalten werden. Zu nennen sind hier insbesondere beschichtete Gläser, beschichtetes Acrylglas, korrosionsgeschützte Metalle oder korrosionsgeschützte, mineralische Substrate, wie ausgehärteter Beton oder Mörtel, oder die genannten organischen Materialien, insbesondere Produkte aus behandelten oder beschichteten Naturfasern. Beispiele dafür sind mit einer erfindungsgemäßen Zusammensetzung behandelte Bewehrungen, die vor ihrer Verwendung im Beton mit der Zusammensetzung beschichtet werden. Zudem kann auch eine noch nicht ausgehärtete Betonmischung mit einer erfindungsgemäßen Zusammensetzung gemischt, verarbeitet und anschließend aushärten. In diesem Fall ist darauf zu achten, dass die Zusammensetzung verarbeitbar bleibt, beispielsweise durch Wahl des richtigen pH-Wertes oder anderer Parameter. Auf diese Weise können beispielsweise hydrophober, korrosionsbeständiger Beton oder Produkte aus Beton erhalten werden, wie Abflussrohe oder Fertigbauteile für Gebäude. Der so behandelte Beton weist eine erheblich bessere Korrosionsbeständigkeit gegenüber Umwelteinflüssen auf.

Daher ist ebenfalls Gegenstand der vorliegenden Erfindung die Verwendung einer erfindungsgemäßen Zusammensetzung zur Behandlung einer Substratoberfläche, wobei der Einsatz einer erfindungsgemäßen Zusammensetzung zur Behandlung einer Metalloberfläche gegen Korrosion besonders bevorzugt ist und man in vorteilhafter Weise eine Korrosionsschutzschicht auf dem behandelten Metallsubstrat erhält.

Somit ist ebenfalls Gegenstand der vorliegenden Erfindung eine Korrosionsschutzschicht bzw. -beschichtung, die auf einer Behandlung mittels einer erfindungsgemäßen Zusammensetzung basiert. Darüber hinaus kann eine solche Korrosionsschutzschicht aus einer Schicht auf der Basis einer erfindungsgemäßen Zusammensetzung und mindestens einer weiteren Schicht, beispielsweise auf der Grundlage eines Pulverlacks oder eines Flüssiglacks, beruhen.

So können Gegenstände bzw. Artikel, die eine Oberfläche besagter Metalle aufweisen, dauerhaft und somit besonders vorteilhaft gegen Korrosion geschützt werden. Besonders interessant ist, dass die beschriebene Korrosionsschutzbeschichtung Lochkorrosion in Aluminiumlegierungen verhindert.

Somit sind auch Gegenstände oder Artikel, die auf einer Behandlung mittels einer erfindungsgemäßen Zusammensetzung basieren Gegenstand der vorliegenden Erfindung.

Die vorliegende Erfindung wird durch die nachfolgenden Beispiele näher erläutert, ohne den Gegenstand zu beschränken.

### Beispiele

### Vergleichszusammensetzung VL 1:

1 kg Stammlösung (VL1-Stammlösung) wurde gemäß EP 0 716 127 B1, Beispiel 5, hergestellt: Anstelle von HCl wurden dabei 60,0 g 85 %ige Ameisensäure eingesetzt. Für die Durchführung der Vergleichsversuche wurden 2,53g VL1 -Stammlösung unter Rühren mit 97,47g VE-Wasser verdünnt (VL1).

### Vergleichszusammensetzung VL 2:

1 kg Stammlösung (VL2-Stammlösung) wurde gemäß WO 2009/030538 A1, Beispiel 1, hergestellt: Anstelle von 17,16 g Ameisensäure (85 %ig) wurden 13,0 g 85 %ige Ameisensäure eingesetzt.

Für die Durchführung der Vergleichsversuche wurden 10g VL2-Stammlösung unter Rühren mit 90g VE-Wasser verdünnt (VL2).

### Vergleichszusammensetzung VL 3:

1 kg Stammlösung (VL3-Stammlösung) wurde gemäß WO 2007/085339 A2, Beispiel 1, hergestellt.

Für die Durchführung der Vergleichsversuche wurden 9,0g VL3-Stammlösung unter Rühren mit 0,02g BYK 348 versetzt und mit 90,98g VE-Wasser verdünnt (VL3).

### Vergleichszusammensetzung VL 4:

0,5 % (w/w) Cr(III)-nitrat x 9 H₂O, 99,5 % H₂O

### Vergleichszusammensetzung VL 5:

1,25 % Surtec LC 680, 98,75 % H₂O (Die wässrige Lösung enthält Cr³⁺- und Co²⁺-Ionen.)

### Vergleichszusammensetzung VL 6:

1 kg Stammlösung (VL6-Stammlösung) wurde gemäß EP 0 716 127 B1, Beispiel 1, hergestellt: Anstelle von 126 g Wasser und 114 g HCl (32 Gew.-% in Wasser) wurden 930 g VE-Wasser zudosiert und anschließend 2 h bei 55 °C gerührt. Anschließend wurde das Ethanol/Wassergemisch abdestilliert. Die Auswaage des Produkts betrug 984 g.

Für die Durchführung der Vergleichsversuche wurden 7,5 g VL6-Stammlösung unter Rühren mit 92,5 g VE-Wasser verdünnt (VL 6).

### Vergleichszusammensetzung VL 7:

### [16,6 % (w/w) VL2-Stammlösung, 83,4 % H₂O]

16,6 g VL-2-Stammlösung wurden mit 83,4 g VE-Wasser verdünnt.

### Vergleichszusammensetzung VL 8:

### [13,3 % (w/w) VL2-Stammlösung, 86,7 % H₂O]

13,3 g VL-2-Stammlösung wurden mit 86,7 g VE-Wasser verdünnt.

### Beispiel 1:

### Herstellung erfindungsgemäßer Zusammensetzungen A1

### Zusammensetzung A1a1:

2,53 g VL1-Stammlösung wurden mit 50 g VE-Wasser verdünnt. 0,5 g Cr(III)-nitrat x 9 H₂O wurden in 46,97 g VE-Wasser gelöst und unter Rühren der verdünnten Stammlösung zugegeben.

### Zusammensetzung A1a2:

7,5 g VL6-Stammlösung wurden mit 50 g VE-Wasser verdünnt. 0,5 g Cr(III)-nitrat x 9 H₂O wurden in 46,25 g VE-Wasser gelöst und unter Rühren der verdünnten Stammlösung zugegeben. '

### Beispiel 2a:

### Herstellung erfindungsgemäßer Zusammensetzungen A2

### Zusammensetzung A2a1:

16,6 g VL2-Stammlösung wurden mit 40 g VE-Wasser verdünnt. 0,5 g Cr(III)-nitrat x 9 H₂O wurden in 42,9 g VE-Wasser gelöst und unter Rühren der verdünnten Stammlösung zugegeben.

### Zusammensetzung A2a2:

10,0 g VL2-Stammlösung wurden mit 40 g VE-Wasser verdünnt. 0,5 g Cr(III)-nitrat x 9 H₂O wurden in 49,5 g VE-Wasser gelöst und unter Rühren der verdünnten Stammlösung zugegeben.

### Beispiel 2b:

### Herstellung nicht erfindungsgemäßer Zusammensetzungen A2

### Zusammensetzung A2b1:

5,5 g VL2-Stammlösung wurden mit 40 g VE-Wasser verdünnt. 0,5 g Al(III)-nitrat x 9 H₂O wurden in 54,0 g VE-Wasser gelöst und unter Rühren der verdünnten Stammlösung zugegeben.

### Zusammensetzung A2b2:

16,6 g VL2-Stammlösung wurden mit 40 g VE-Wasser verdünnt. 0,5 g Al(III)-nitrat x 9 H₂O wurden in 42,9 g VE-Wasser gelöst und unter Rühren der verdünnten Stammlösung zugegeben.

### Beispiel 2c:

### Herstellung nicht erfindungsgemäßer Zusammensetzungen A2

### Zusammensetzung A2c:

5,5 g VL2-Stammlösung wurden mit 40 g VE-Wasser verdünnt. 0,5 g Ce(III)-nitrat x 6 H₂O wurden in 42,9 g VE-Wasser gelöst und unter Rühren der verdünnten Stammlösung zugegeben.

### Beispiel 3:

### Herstellung der erfindungsgemäßen Zusammensetzung B1

### Zusammensetzung B1:

2,53 g VL3-Stammlösung wurden mit 0,02 g BYK 348 versetzt und mit 40 g VE-Wasser verdünnt. 0,5 g Cr(III)-nitrat x 9 H₂O wurden in 50,48 g VE-Wasser gelöst und unter Rühren der zuvor verdünnten Lösung zugegeben.

Alle erfindungsgemäßen Zusammensetzungen gemäß den Beispielen 1 bis 3 waren bei Raumtemperatur mehr als 3 Monate lagerstabil.

### Beispiel 4:

### Zusammensetzung A2aX

### [13,3 % /w/w) VL2-Stammlösung, 0,5 % Cr(III)-nitrat x 9 H₂O]

13,3 g VL2-Stammlösung wurden mit 40 g VE-Wasser verdünnt. 0,5 g Cr(III)-nitrat x 9 H₂O wurden in 46,2 g VE-Wasser gelöst und unter Rühren der verdünnten Stammlösung zugegeben.

Die so hergestellten Zusammensetzungen wurden nach einem Tag Topfzeit angewendet.

### Anwendungsbeispiele:

### Reinigung der feuerverzinkten Stahlbleche (HDG 4 Chemetall)

Die verzinkten Stahlbleche wurden mit einem organischen Lösungsmittel (Ethylacetat) gereinigt und anschließend in ein alkalisches Reinigungsbad gestellt (Zusammensetzung: 10,0 g/l S 5610 (Chemetall), pH 11,5, 60 °C, 30 sec). Nach der alkalischen Reinigung wurden die Metallsubstrate zunächst mit heißem Wasser und dann mit VE-Wasser gespült.

### Korrosionsuntersuchungen

Die Korrosionstests wurden in einem Salzsprühnebel durchgeführt (Prüfung nach DIN 50021-SS).

### Anwendungsbeispiel 1:

### feuerverzinkte Stahlbleche

Die Reinigung erfolgte wie unter "Reinigung der feuerverzinkten Stahlbleche" beschrieben. Die gereinigten Probenbleche wurden mit folgenden Lösungen behandelt:
a) Referenz ohne Behandlung
b) Zusammensetzung A2a1 [16,6 % (w/w) VL2-Stammlösung, 0,5 % Cr(III)-nitrat x 9 H₂O, 82,9 % H₂O]
c) Zusammensetzung A2a2 [10,0 % (w/w) VL2-Stammlösung, 0,5 % Cr(III)-nitrat x 9 H₂O, 89,5 % H₂O]
d) Vergleichszusammensetzung VL2 [10,0 % (w/w) VL2-Stammlösung, 90,0 % H₂O]
Die Metallsubstrate wurden bei 20 °C 30 sec in die Lösung getaucht, bei 20 °C 5 min getrocknet und schließlich 10 min bei 80 °C gehärtet.

Nach 24 h wurden die beschichteten Metallsubstrate in die Salzsprühnebelkammer gestellt.

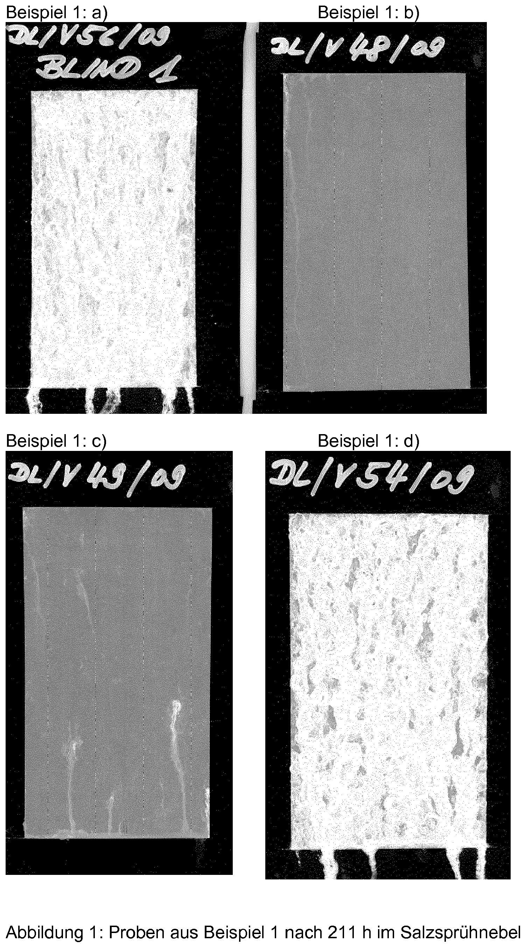

Abbildung 1 zeigt die Ergebnisse nach 211 h im Salzsprühnebel.

Ergebnisse:
a) die Referenz zeigt Weißrost auf der gesamten Oberfläche
b) geringe Spuren von Weißrost am Rand
c) geringe Spuren von Weißrost am Rand und an wenigen Stellen auf der Flächenmitte
d) nahezu die gesamte Fläche ist mit Weißrost belegt

### Anwendungsbeispiel 2:

### feuerverzinkte Stahlbleche

Die Reinigung erfolgte wie unter "Reinigung der feuerverzinkten Stahlbleche" beschrieben. Die gereinigten Probenbleche wurden mit folgenden Lösungen behandelt:
a) Referenz ohne Behandlung
b) Zusammensetzung A2b1 [5,5 % (w/w) VL2-Stammlösung, 0,5 % Al(III)-nitrat x 9 H₂O, 94,0 % H₂O]
c) Zusammensetzung A2b2 [16,6 % (w/w) VL2-Stammlösung, 0,5 % Al(III)-nitrat x 9 H₂O, 82,9 % H₂O]
d) Vergleichszusammensetzung VL2 [10,0 % (w/w) VL2-Stammlösung, 90,0 % H₂O]
e) Vergleichszusammensetzung VL4 [0,5 % (w/w) Cr(III)-nitrat x 9 H₂O, 99,5 % H₂O]
f) Zusammensetzung A2c [5,5 % (w/w) VL2-Stammlösung, 0,5 % Cer(III)-nitrat x 6 H₂O]

Die Metallsubstrate wurden bei 20 °C 30 sec in die Lösung getaucht, bei 20 °C 5 min getrocknet und schließlich 10 min bei 80 °C temperiert.

Nach 24 h wurden die beschichteten Metallsubstrate in die Salzsprühnebelkammer gestellt.

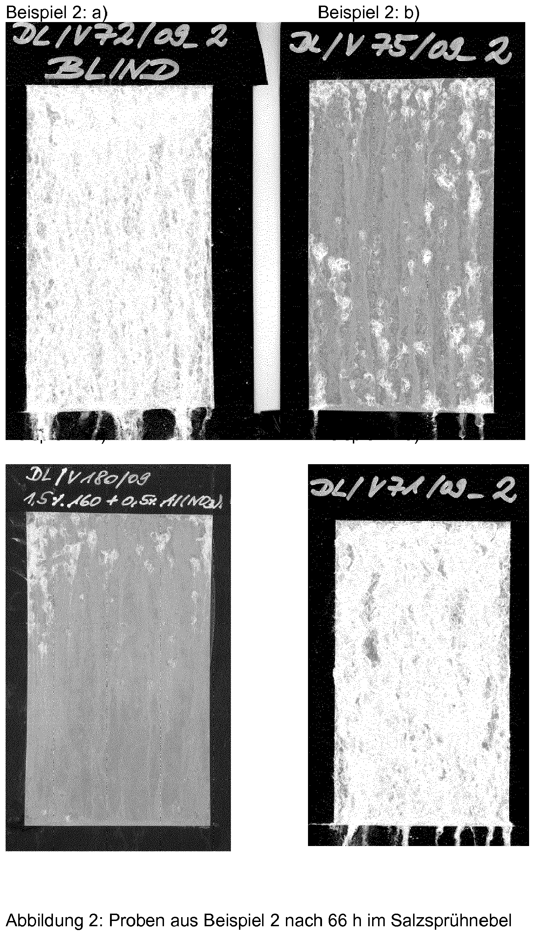

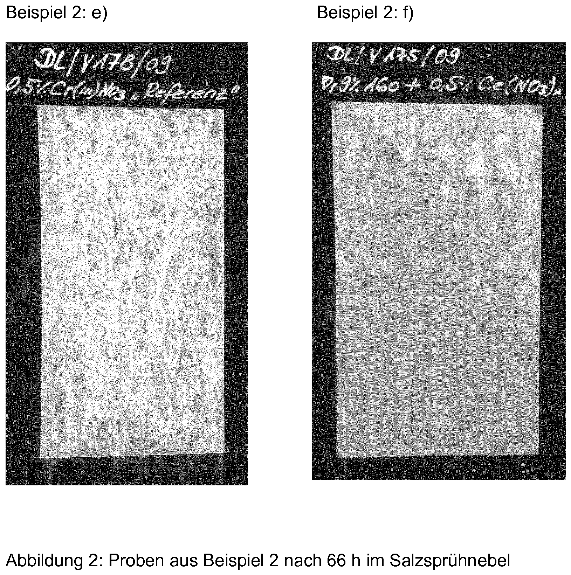

Abbildung 2 zeigt die Ergebnisse nach 66 h im Salzsprühnebel.

Ergebnisse:
a) Weißrostbildung auf der gesamten Fläche
b) Weißrostbildung partiell auf der gesamten Fläche
c) Wenig Weißrost
d) Weißrostbildung auf der gesamten Fläche
e) Weißrostbildung auf der gesamten Fläche
f) Weißrostbildung im oberen Teil

### Anwendungsbeispiel 3:

### zinkphosphatierte Stahlbleche

Die Reinigung erfolgte wie unter "Reinigung der feuerverzinkten Stahlbleche" beschrieben, jedoch wurde der pH-Wert von VE-Wasser mit S 5610 auf 10 eingestellt.

Die gereinigten Probenbleche wurden mit folgenden Lösungen behandelt:
a) Referenz ohne Behandlung
b) Zusammensetzung A2a2 [10,0 % (w/w) VL2-Stammlösung, 0,5 % Cr(III)-nitrat x 9 H₂O, 82,9 % H₂O]
c) Vergleichszusammensetzung VL4 [0,5 % Cr(III)-nitrat x 9 H₂O, 99,5 % H₂O]
d) Vergleichszusammensetzung VL5 [1,25 % Surtec LC 680, 98,75 % H₂O]
e) Vergleichszusammensetzung VL2 [10,0 % (w/w) VL2-Stammlösung, 90,0 % H₂O]

Die Metallsubstrate wurden bei 20 °C 30 sec in die Lösung getaucht, bei 20 °C getrocknet und insgesamt 24 h bei 20 °C gelagert.

Nach 24 h wurden die beschichteten Metallsubstrate in der Salzsprühnebelkammer gestellt.

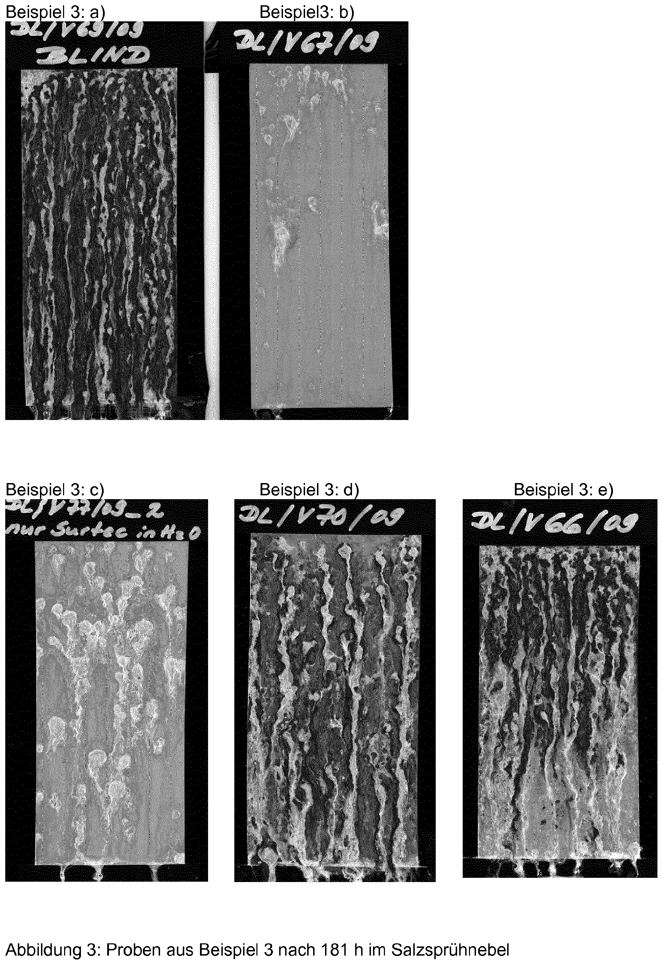

Abbildung 3 zeigt die Ergebnisse nach 180 h im Salzsprühnebel.

Ergebnisse:
a) Rotrost auf der gesamten Fläche
b) Inseln mit Weißrost
c) Sehr viel Rotrost und etwas Weißrost
d) Viele Inseln mit Weißrost
e) Hauptsächlich Rotrost

### Anwendungsbeispiel 4:

### verzinkte Stahlbleche

Die Reinigung erfolgte wie unter "Reinigung der feuerverzinkten Stahlbleche" beschrieben. Die gereinigten Probenbleche wurden mit folgenden Lösungen behandelt:
a) Referenz ohne Behandlung
b) Vergleichszusammensetzung VL3 [9,0 % (w/w) VL3-Stammlösung, 0,02 % BYK 348, 90,98 % H2O]
c) Zusammensetzung B1 [9,0 % (w/w) VL3-Stammlösung, 0,02 % BYK 348, 0,5 % Cr(III)-nitrat x 9 H₂O, 90,48 % H₂O]

Die Metallsubstrate wurden bei 20 °C 30 sec in die Lösung getaucht, bei 20 °C 5 min getrocknet und schließlich 10 min bei 200 °C temperiert.

Nach 24 h wurden die beschichteten Metallsubstrate in die Salzsprühnebelkammer gestellt.

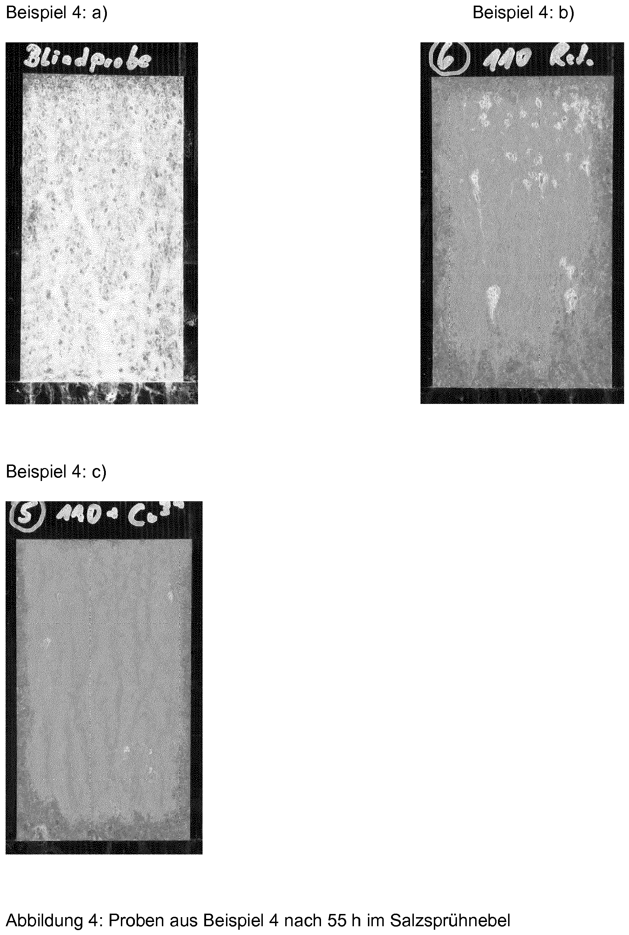

Abbildung 4 zeigt die Ergebnisse nach 55 h im Salzsprühnebel.

Ergebnisse:
a) gesamte Fläche mit Weißrost belegt
b) Weißrost auch in der Fläche
c) Weißrost in der Fläche, jedoch besser als b)

### Anwendungsbeispiel 5:

### verzinkte Stahlbleche

Die Reinigung erfolgte wie unter "Reinigung der feuerverzinkten Stahlbleche" beschrieben. Die gereinigten Probenbleche wurden mit folgenden Lösungen behandelt:
a) Referenz ohne Behandlung
b) Vergleichszusammensetzung VL1 [2,53 % (w/w) VL1 -Stammlösung, 97,47 % H₂O]
c) Zusammensetzung A1a1 [2,53 % (w/w) VL1-Stammlösung, 0,5 % Cr(III)-nitrat x 9 H₂O, 96,97 % H₂O]

Die Metallsubstrate wurden bei 20 °C 30 sec in die Lösung getaucht, bei 20 °C 5 min getrocknet und schließlich 10 min bei 120 °C temperiert.

Nach 24 h wurden die beschichteten Metallsubstrate in die Salzsprühnebelkammer gestellt.

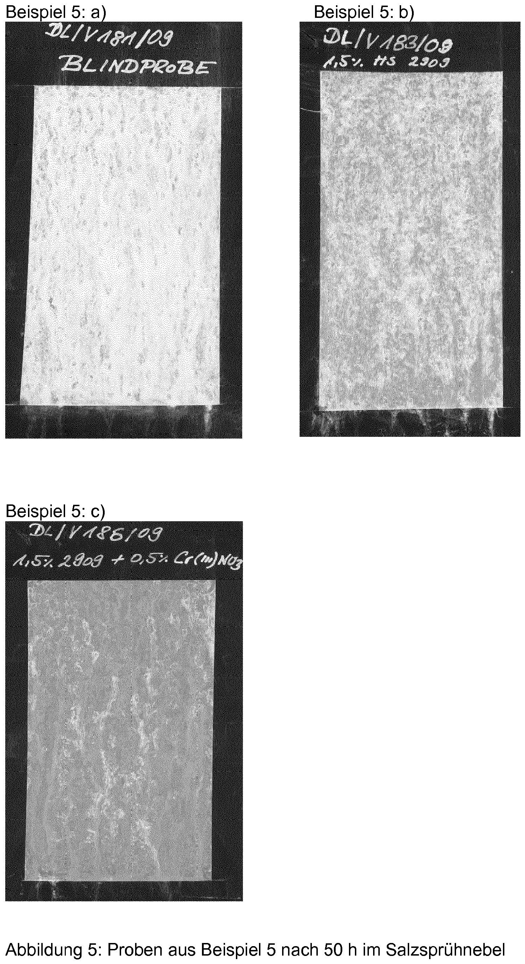

Abbildung 5 zeigt die Ergebnisse nach 50 h im Salzsprühnebel.

Ergebnisse:
a) gesamte Fläche mit Weißrost belegt
b) Weißrost über die gesamte Fläche verteilt
c) Weißrostanteil geringer, aber über die gesamte Fläche verteilt

### Anwendungsbeispiel 6:

### verzinkte Stahlbleche

Die Reinigung erfolgte auch hier wie bereits oben unter "Reinigung der feuerverzinkten Stahlbleche" beschrieben. Die gereinigten Probenbleche wurden mit folgenden Lösungen behandelt:
a) Referenz ohne Behandlung
b) Vergleichszusammensetzung VL1 [2,53 % (w/w) VL1 -Stammlösung, 97,47 % H₂O]
c) Zusammensetzung A1a1 [2,53 % (w/w) VL1-Stammlösung, 0,5 % Cr(III)-nitrat x 9 H₂O, 96,97 % H₂O]
d) Vergleichszusammensetzung VL 6 [7,5 g VL6-Stammlösung wurden unter Rühren mit 92,5 g VE-Wasser verdünnt (VL 6)]
e) Zusammensetzung A1a2 [7,5 % (w/w) VL6-Stammlösung, 0,5 % Cr(III)-nitrat x 9 H₂O, 92 % VE-Wasser]

Die Metallsubstrate wurden bei 20 °C 30 sec in die Lösung getaucht, bei 20 °C 5 min getrocknet und schließlich 10 min bei 180 °C temperiert.

Nach 24 h wurden die beschichteten Metallsubstrate in die Salzsprühnebelkammer gestellt.

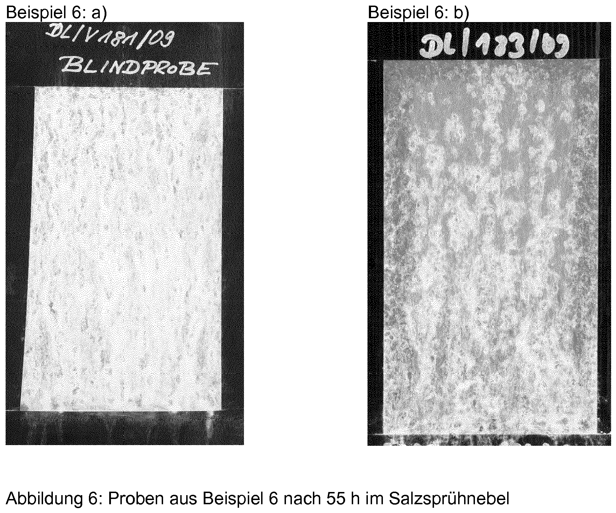

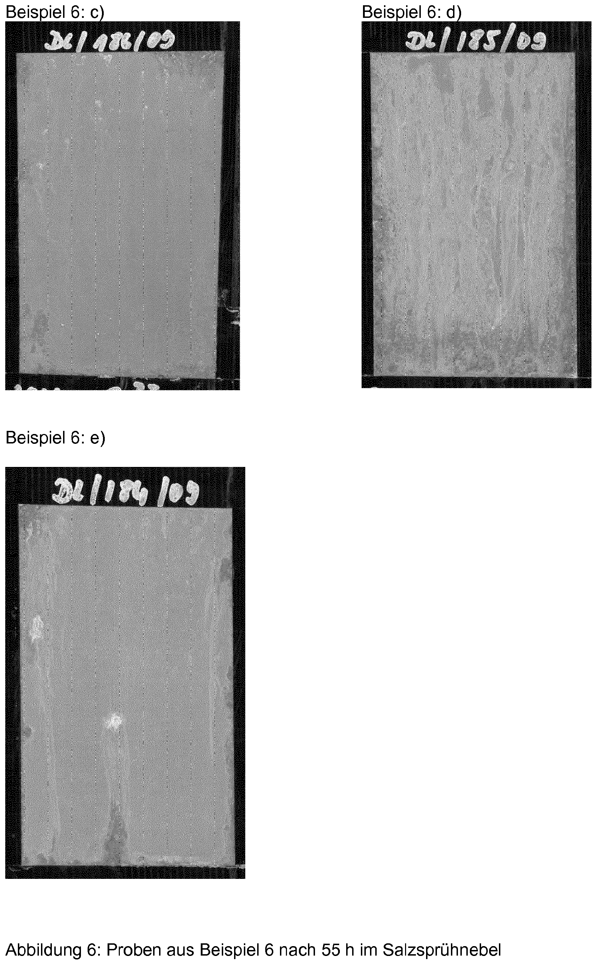

Abbildung 6 zeigt die Ergebnisse nach 55 h im Salzsprühnebel.

Ergebnisse:
a) gesamte Fläche mit Weißrost belegt
b) große Flächenanteile mit Weißrost
c) ganz wenige Inseln mit Weißrost
d) geringer Weißrostbefall auf der gesamten Fläche
e) wenige Inseln mit Weißrost

### Anwendungsbeispiel 7:

### Reinigung der Aluminiumbleche (Legierung 5005 H24, Größe 76 x 152 mm)

Die Aluminiumbleche wurden in ein alkalisches Reinigungsbad gestellt (Zusammensetzung: 10 g Ridoline C72 RS, pH ca. 13, 60°C, 30 Sekunden). Nach der alkalischen Reinigung wurden die Bleche zunächst mit heißem Wasser und dann mit VE Wasser gespült. Danach wurden die Bleche in ein saures Dekapierbad gestellt (Zusammensetzung: 10 % HNO₃, 2 Minuten, Raumtemperatur) Danach wurden die dekapierten Bleche mit VE Wasser gespült und mit Stickstoff trockengeblasen.

### Beschichtung der Aluminiumbleche

Die Reinigung erfolgte wie zuvor unter "Reinigung der Aluminiumbleche" beschrieben. Die gereinigten Alubleche wurden mit folgenden Lösungen behandelt:
a) Referenz ohne Behandlung
b) Zusammensetzung A2a1 [16,6 % (w/w) VL2-Stammlösung, 0,5 % Cr(III)-nitrat x 9 H₂O, 82,9 % H₂O]
c) Zusammensetzung A2aX [13,3 % (w/w) VL2-Stammlösung, 0,5 % Cr(III)-nitrat x 9 H₂O, 86,2 % H₂O]
d) Zusammensetzung A2a2 [10,0 % (w/w) VL2-Stammlösung, 0,5 % Cr(III)-nitrat x 9 H₂O, 89,5 % H₂O]
e) Vergleichszusammensetzung 1 [16,6 % (w/w) VL2-Stammlösung, 83,4 % H₂O]
f) Vergleichszusammensetzung 2 [13,3 % (w/w) VL2-Stammlösung, 86,7 % H₂O]
g) Vergleichszusammensetzung 3 [10,0 % (w/w) VL2-Stammlösung, 90,0 % H₂O]

Die Aluminiumbleche wurden bei 20°C 30 sec. in die Lösung getaucht und anschließend 10 Minuten bei 80°C gehärtet.

Nach 24 h wurden die beschichteten Aluminiumbleche in die Salzsprühkammer gestellt.

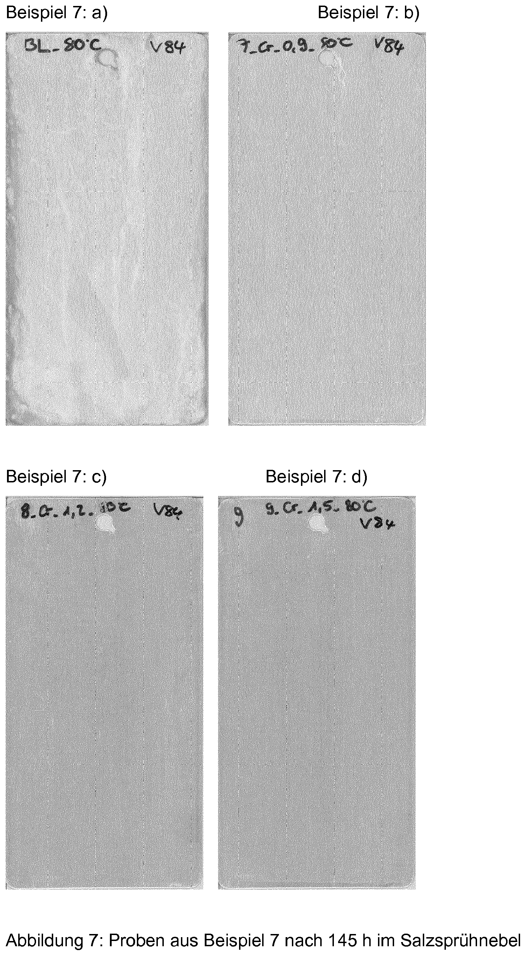

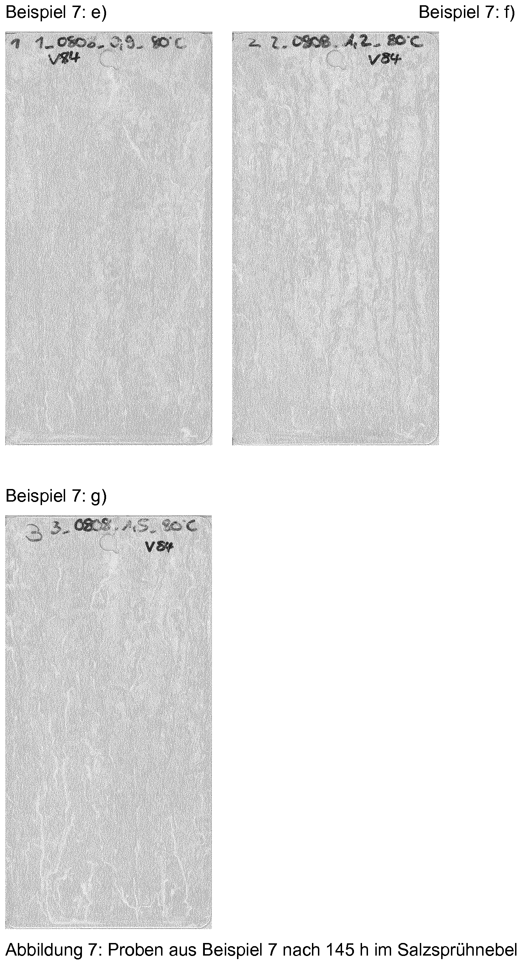

Abbildung 7 zeigt die Ergebnisse nach 145 h im Salzsprühnebel.

Ergebnisse:
a) die Referenz zeigt Korrosion auf der gesamten Oberfläche
b) schwache Korrosion auf der gesamten Oberfläche
c) keine Korrosion
d) keine Korrosion
e) bis g) Korrosion auf der gesamten Oberfläche

## Patentansprüche

1. Verfahren zur Herstellung einer wässrigen Zusammensetzung,
durch
(i) gezielte Hydrolyse und Kondensation bzw. Cokondensation mindestens eines Aminoalkylalkoxysilans aus der Reihe der Monoaminoalkylalkoxysilane, Bisaminoalkylalkoxysilane sowie Trisaminoalkylalkoxysilane und optional mindestens eines Alkoxysilans aus der Reihe der Fluoralkylalkoxysilane, Alkylalkoxysilane sowie Tetraalkoxysilane,
(ii) in Gegenwart mindestens eines Hydrolyse- bzw. Kondensationskatalysators und Wasser sowie optional eines Löse- bzw. Verdünnungsmittels,
(iii) anschließend entfernen mindestens eines Anteils des Löse- bzw. Verdünnungsmittels sowie des bei der Hydrolyse und Kondensation bzw. Cokondensation entstandenen Hydrolysealkohols aus dem Reaktionsgemisch,
(iv) der Zugabe von Wasser und/oder einer wässrigen Säure zu dem Reaktionsgemisch gemäß (iii), wobei man den pH im Reaktionsgemisch auf einen Wert von 2 bis < 7 einstellt, und
(v) nachfolgend der Zusatz mindestens eines Metallsalzes des Chroms mit der Oxidationsstufe 3+ und/oder der Zusatz einer wässrigen Lösung mindestens eines der zuvor genannten Metallsalze, wobei man Metallsalz in einer Konzentration von 0,01 bis 6 Gew.-%, bezogen auf die fertige Zusammensetzung, einsetzt und als Metallsalz mindestens eines aus der Reihe der Nitrate oder Acetate auswählt.

2. Wässrige Zusammensetzung, erhältlich nach Anspruch 1.

3. Verwendung einer Zusammensetzung, hergestellt nach Anspruch 1, zur Behandlung einer Substratoberfläche.

4. Verwendung nach Anspruch 3, wobei man die Zusammensetzung zur Behandlung einer Metalloberfläche gegen Korrosion einsetzt.

5. Korrosionsschutzschicht bzw. -beschichtung auf einem Metallsubstrat, die auf einer Behandlung mittels einer Zusammensetzung, hergestellt nach Anspruch 1, basiert.

6. Korrosionsschutzschicht bzw. -beschichtung nach Anspruch 5, wobei diese aus einer Schicht auf der Basis der Zusammensetzung, die nach Anspruch 1 hergestellt ist, und mindestens einer weiteren Schicht, insbesondere einer Lackschicht, beruht.

## Claims

1. A process for producing an aqueous composition by
(i) specific hydrolysis and condensation/cocondensation of one or more than one aminoalkylalkoxysilane from the series of monoaminoalkylalkoxysilanes, bisaminoalkylalkoxysilanes and trisaminoalkylalkoxysilanes and optionally one or more than one alkoxysilane from the series of fluoroalkylalkoxysilanes, alkylalkoxysilanes and tetraalkoxysilanes,
(ii) in the presence of one or more than one hydrolysis/condensation catalyst and water and also in the optional presence of one or more than one solvent/diluent,
(iii)then removing from the reaction mixture the solvent/diluent and also the hydrolysis alcohol, formed in the course of the hydrolysis and condensation/cocondensation, at least partially,
(iv) adding water and/or an aqueous acid to the reaction mixture as per (iii), wherein the pH of the reaction mixture is set to a value in the range from 2 to < 7, and
(v) subsequently adding at least one metal salt of chromium in oxidation state 3+ and/or adding an aqueous solution of one or more than one of the aforementioned metal salts, wherein metal salt is used in a concentration of 0.01% to 6% by weight, based on the final composition, and the metal salt selected is at least one from the series of nitrates or acetates.

2. An aqueous composition obtainable according to claim 1.

3. The use of a composition obtained according to claim 1, for treating a substrate surface.

4. The use according to claim 3 wherein the composition is used for treating a metal surface against corrosion.

5. A corrosion control coat/coating on a metal substrate, based on a treatment with a composition obtained according to claim 1.

6. The corrosion control coat/coating according to claim 5, resting on a layer based on the composition obtained according to claim 1 and on one or more than one further layer, more particularly a paint layer.

## Revendications

1. Procédé de fabrication d'une composition aqueuse, par
(i) l'hydrolyse ciblée et la condensation ou co-condensation d'au moins un aminoalkylalcoxysilane de la série constituée par les monoaminoalkylalcoxysilanes, les bisaminoalkylalcoxysilanes et les trisaminoalkylalcoxysilanes, et éventuellement d'au moins un alcoxysilane de la série constituée par les fluoroalkylalcoxysilanes, les alkylalcoxysilanes et les tétraalcoxysilanes,
(ii) en présence d'au moins un catalyseur d'hydrolyse ou de condensation et d'eau, et éventuellement d'un solvant ou diluant, puis
(iii) l'élimination d'au moins une partie du solvant ou diluant, ainsi que de l'alcool de l'hydrolyse formé lors de l'hydrolyse et de la condensation ou co-condensation du mélange réactionnel,
(iv) l'ajout d'eau et/ou d'un acide aqueux au mélange réactionnel selon (iii), le pH du mélange réactionnel étant ajusté à une valeur de 2 à < 7, puis
(v) l'ajout d'au moins un sel métallique de chrome de niveau d'oxydation 3+ et/ou l'ajout d'une solution aqueuse d'au moins un des sels métalliques susmentionnés, le sel métallique étant utilisé en une concentration de 0,01 à 6 % en poids, par rapport à la composition finie, et au moins un sel de la série constituée par les nitrates ou les acétates étant choisi en tant que sel métallique.

2. Composition aqueuse, pouvant être obtenue selon la revendication 1.

3. Utilisation d'une composition, fabriquée selon la revendication 1, pour le traitement d'une surface de substrat.

4. Utilisation selon la revendication 3, dans laquelle la composition est utilisée pour le traitement d'une surface de substrat contre la corrosion.

5. Couche ou revêtement anticorrosion sur un substrat métallique, qui est à base d'un traitement au moyen d'une composition fabriquée selon la revendication 1.

6. Couche ou revêtement anticorrosion selon la revendication 5, celle-ci ou celui-ci consistant en une couche à base de la composition qui est fabriquée selon la revendication 1 et au moins une autre couche, notamment d'une couche de vernis.
